# EUROPEAN PATENT SPECIFICATION

(11) **EP 4 025 166 B1**
(45) Date of publication and mention of the grant of the patent: **08.11.2023**
(21) Application number: 20764661.3
(22) Date of filing: 01.09.2020
(51) Int. Cl.: A61G 5/06, A61G 3/08, B62D 55/06, B62D 63/02, B62D 55/104, B62D 55/24, B62D 55/30

(54) **TRACKED VEHICLE FOR THE TRANSPORTATION OF REDUCED MOBILITY PERSONS**
KETTENFAHRZEUG ZUM TRANSPORT VON PERSONEN MIT REDUZIERTER MOBILITÄT
VÉHICULE À CHENILLES POUR LE TRANSPORT DE PERSONNES À MOBILITÉ RÉDUITE

(30) Priority: 02.09.2019 EP 19306063
(43) Date of publication of application: 13.07.2022
(73) Proprietor: INSTITUT NATIONAL DE LA SANTE ET DE LA RECHERCHE MEDICALE - INSERM, 75013 Paris (FR); ASSISTANCE PUBLIQUE HOPITAUX DE PARIS, 75004 Paris (FR); Carta-Rouxel, 78440 Gargenville (FR)
(72) Inventor: CARTA, Jean-Paul, 78440 Gargenville (FR); BARBOT, Frédéric, 92380 Garches (FR)
(74) Representative: Lavoix
(86) International application number: PCT/EP2020/074298
(87) International publication number: WO 2021/043746

(56) References cited:
- US-A1- 2004 144 577
- US-A1- 2010 133 018

## Description

### TECHNICAL FIELD OF THE INVENTION

This invention relates to a tracked vehicle, also called a crawler vehicle, designed for transporting reduced mobility persons, i.e. disabled or handicapped persons. In particular, this invention relates to a vehicle specially designed for transporting two people, including one reduced mobility person seated in a wheelchair.

The technical field of the invention is the one of transportation of people, in particular seated in a wheelchair, inside or outside a building, on a variety of ground configurations.

### BACKGROUND OF THE INVENTION

In the field of transportation of people seated in a wheelchair, US-A-2010/133018 discloses an all-terrain vehicle designed for handicapped individuals and including two endless belts associated with a relatively complex suspension system, potentially fragile. On the other hand, US-A-4 960 180 discloses a wheelchair provided with an endless track drive for travel over rough ground. Such a wheelchair can be powered with an electric motor.

A problem with these known devices is that their turning radius is large, as compared to the size of the vehicle. In particular, if one tries to make a short turn on a soft ground, the movements of the endless belts tend to damage the ground on a large area. This can be a problem, for instance if such a vehicle is used for touring a handicapped person in an opened space, such as a public garden, where one risks damaging the garden alleys.

### SUMMARY OF THE INVENTION

This invention aims at solving this problem by proposing a new tracked vehicle whose suspension system is reliable and allows shaft turning, without damaging, on a large area, the ground on which the vehicle is moving.

To this aim, the invention relates to a tracked vehicle for the transportation of at least one reduced mobility person, this vehicle comprising a passenger compartment and an endless track drive on each side of this passenger compartment. Each endless track drive comprises an endless belt, an electric motor connected to a drive pulley in engagement with the belt, an idle pulley, a sub-frame supporting the drive pulley and the idle pulley, respectively around a first rotation axis and a second rotation axis parallel to the first rotation axis, and a suspension system. According to the invention, the suspension system includes two articulated arms mounted on the sub-frame with a possibility of rotation around a first articulation axis and a second articulation axis, these articulation axes being parallel to the first and second rotation axes. Each articulated arm is equipped with several rollers in permanent contact with an upper surface of a lower strand of the endless belt, between the two pulleys, and with a set of teeth in meshing engagement with the set of teeth of the other arm. The suspension system also includes elastic means for biasing the sets of teeth of the two articulated arms toward the lower strand of the endless belt.

Owing to the invention, the elastic means push the two articulated arms toward the lower strand of the endless belt in a central zone of the endless track drive where the respective sets of teeth cooperate. Because of the meshing engagement between the sets of teeth, the two articulated arms have a coordinated movement, which concentrates the mechanical effort exerted by the elastic means on a central zone of the lower strand of the endless belt, near the rollers. This allows reducing the actual length of the contact zone between the lower surface of the lower strand of the endless belt and the ground. Thus, when the vehicle is making a turn, it interacts with the ground on a relatively small surface, which avoids damaging the ground on a large area.

According to further aspects of the invention, which are optional, such a tracked vehicle might incorporate one or several of the following features:
Each articulated arm has at least one toothed portion in the form of an arc of a circle, centered on its articulation axis on the sub-frame.
- Each articulated arm includes
   - a main shaft extending along a longitudinal axis radial with respect to the first or second articulation axis, said shaft being articulated on the sub-frame at or near a first end of said shaft; and
   - a fork structure with two plates extending on either side of the longitudinal axis, at a second end of this shaft opposite to its first end, each plate being provided with at least one toothed portion in meshing engagement with a toothed portion of the other arm.
- One of the articulated arms has a sole extending between the two plates of its fork structure and receiving the biasing effort exerted by the elastic means.
- The elastic means include at least one coil spring and the sole is equipped with a centering protrusion inserted into the coil spring.
- The tracked vehicle includes at least one protection plate mounted on one of the articulated arms and covering an engagement zone between the sets of teeth of the two articulated arms.
- The tracked vehicle includes a main frame supported by the two sub-frames of the two endless track drives, this main frame comprising a first part located between the two endless track drives and a second part extending upwardly, above the first part, and forming a reception volume for batteries supplying the electric motors of the two endless track drives with electricity.
- The first part of the main frame has a U shape with two branches extending each along an endless track drive and a base located on the rear of the vehicle, the second part extending above the base of the first part.
- The passenger compartment is formed by a cradle supported by a parallelogram structure articulated on the main frame, preferably on its second part.
- The parallelogram structure includes two pairs of arms, each arm being articulated on the main frame and extending on one side of the cradle, and at least one actuator for moving the cradle and the parallelogram structure with respect to the main frame.
- The parallelogram structure is articulated on the second part of the main frame and includes a first U-shaped support member whose branches form two arms located on either side of the cradle and a second U-shaped support member whose branches form two other arms located on either side of the cradle.
- The parallelogram structure includes an actuator configured for keeping an attitude of the passenger compartment when the vehicle moves downhill, on a horizontal surface or uphill.
- The tracked vehicle includes a damping mechanism between the cradle and the main frame, in particular in the form of two arms mounted on the main frame and equipped with damping means designed for coming into contact with the cradle.
- The passenger compartment defines two locations, each adapted for accommodating one passenger, these locations being defined one after the other along a longitudinal axis of the vehicle, with a first location situated on the front of the vehicle and adapted for accommodating a reduced mobility person and a second location situated on the rear of the vehicle and forming the driver's post of the vehicle.
- The first location is equipped with a mechanism for holding the wheels of a wheelchair, this mechanism being adaptable to an axle track of the wheelchair.

### BRIEF DECRIPTION OF THE DRAWINGS

The invention will be better understood and other advantages thereof will appear more clearly upon reading of the following description of one embodiment of a tracked vehicle implementing the invention, provided solely as an example and made in reference to the appended drawings, in which:
- Figure 1 is a perspective view of a tracked vehicle according to the invention, with two people seated in this vehicle;
- Figure 2 is a perspective view, from another angle of two endless track drives and a part of a main frame of the vehicle of claim 1;
- Figure 3 is a perspective view, from an angle similar to the one of figure 1, of the part of the vehicle visible on figure 2, together with a second part of the main frame and a parallelogram structure;
- Figure 4 is a side view of the vehicle of figures 1, 2 and 3 in a configuration where it is equipped with a roof;
- Figure 5 is a side view of the left endless track drive of the vehicle, where a protection plate has been removed, for showing two sets of teeth;
- Figure 6 is an exploded perspective view with partial tearing, corresponding to details VI on figure 5;
- Figure 7 is a perspective view of a mechanism for holding the wheels of a wheelchair in the passenger compartment of the vehicle of figures 1 to 6; and
- Figures 8 to 11 show different configurations of use of the vehicle of figures 1 to 7, on different grounds and on different occasions.

### DETAILED DESCRIPTION OF SOME EMBODIMENTS

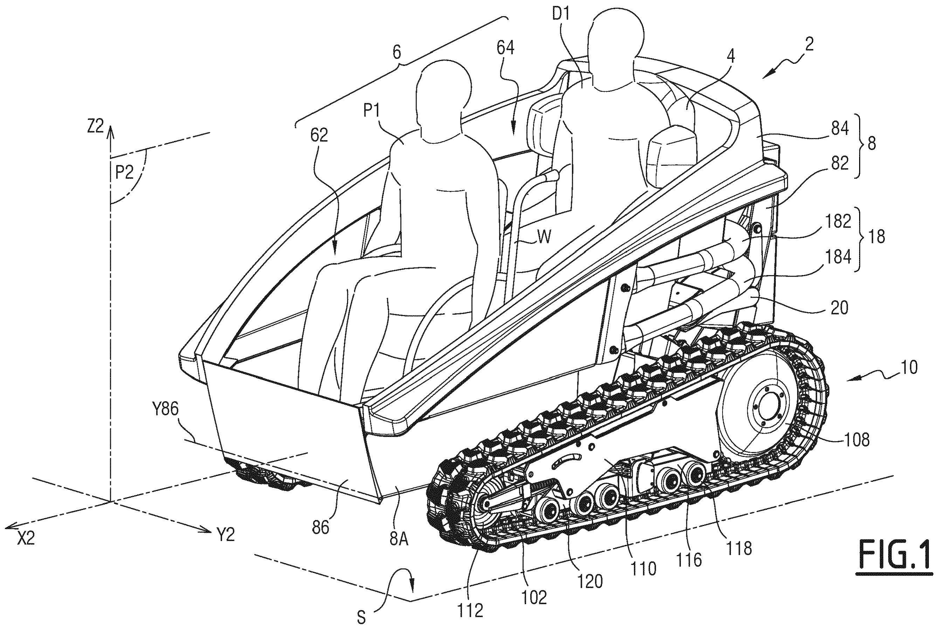

The vehicle 2 represented on figures 1 to 11 is used for transporting a reduced mobility person P1 seated in a wheelchair. A driver D1 pilots the vehicle 2 and is seated in a seat 4, which belongs to the driver's post of the vehicle. The driver's post is equipped with non-represented control means, such as a joystick, some buttons and/or pedals, allowing the driver D1 to pilot the vehicle 2. These control means together form the piloting interface of the vehicle 2.

X2 denotes a longitudinal axis of the vehicle 2. This axis is aligned on the direction of movement of the vehicle when the vehicle moves in a straight direction. Axis X2 is horizontal when the vehicle 2 lies on a flat and horizontal ground surface S. Y2 denotes a transverse axis of the vehicle 2, this transverse axis being perpendicular to axis X2 and horizontal when the vehicle 2 lies on a horizontal and flat surface S. Z2 denotes a second transverse axis of the vehicle 2 which is perpendicular to axes X2 and Y2 and vertical when the vehicle 2 lies on a flat and horizontal surface S. P2 denotes a longitudinal median plane of the vehicle 2. This plane P2 includes axes X2 and Z2.

The driver D1 and the reduced mobility person P1 are both seated in a passenger compartment 6 defined by a cradle 8, or vehicle body, formed by a metallic box 82 and a plastic finishing profile 84. The metallic box 82 is manufactured by assembling several sheet metal plates, by welding and/or screwing.

According to a non-represented alternative embodiment of the invention, the vehicle body 8 or cradle can be made of a single piece, in particular by the metallic box 82 alone.

The passenger compartment 6 defines two locations, a first location 62 adapted for accommodating the reduced mobility person P1 seated in the wheelchair W and a second location 64 forming the driver's post, adapted for accommodating the driver D1. These two locations 62 and 64 are defined one after the other, along axis X2. The location 62 of the reduced mobility person P1 is situated on the front of the vehicle 2 and the driver's post 64 is situated on the back of the vehicle, the driver D1 being preferably seated slightly above the reduced mobility person P1, in order to have a unobstructed view to the front.

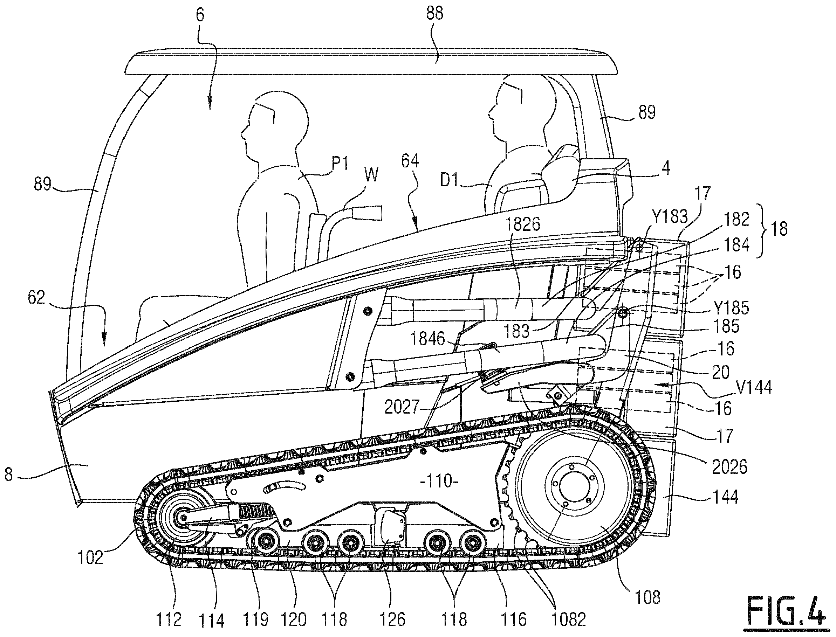

As shown on figure 4 only, the cradle 8 can be equipped with a roof 88 supported by several posts 89, four posts in this example. This roof can be removable or permanently mounted on the cradle.

The left side of the vehicle is the one located on the left of the driver D1 and of the reduced mobility person P1 seated in the passenger compartment 6. The left side of the vehicle 2 is visible on figures 1, 4 and 8 to 11. The right side of the vehicle is the side of the vehicle located on the right of the driver and of the reduced mobility person.

A first endless track drive 10 is located on the left of the passenger compartment 6. A second endless track drive 12 is located on the right side of the vehicle 2.

The endless track drives 10 and 12 have basically the same structure. Hereafter, one describes the left endless track drive 10 in details. This description can be transposed to the right endless track drive 12.

The vehicle 2 includes a main frame 14 made of a first rigid part 142, located between the two endless track drives 10 and 12, and a second rigid part 144 extending upwardly above the first part 142, on the rear of the vehicle 2. The first and second rigid parts 142 and 144 of the main frame are made of sheet metal plates assembled together by welding and/or screwing.

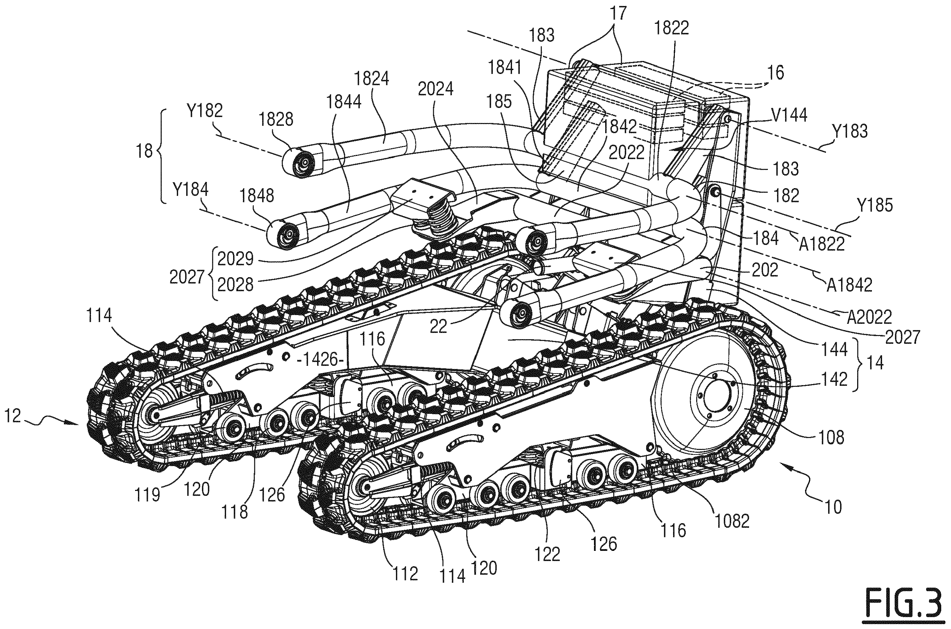

The second part 144 of the main frame 14 defines a reception volume V144 for receiving batteries 16 mounted on the main frame 14, in order to supply the vehicle with electricity, in particular the endless track drives 10 and 12 and the piloting interface of the driver's post. As visible on figures 3 and 4 and 8 to 11 where only some batteries 16 are represented for the sake of simplicity, the batteries are distributed in height. In other words, the reception volume V144 is divided in several sub-volumes located one on top of the other, each sub-volume accommodating one or several batteries 16. The reception volume V144 is closed by several covers 17 mounted on the second part 144 of the main frame 14. The covers 17 protect the batteries 16 and improve the aesthetics of the vehicle 2.

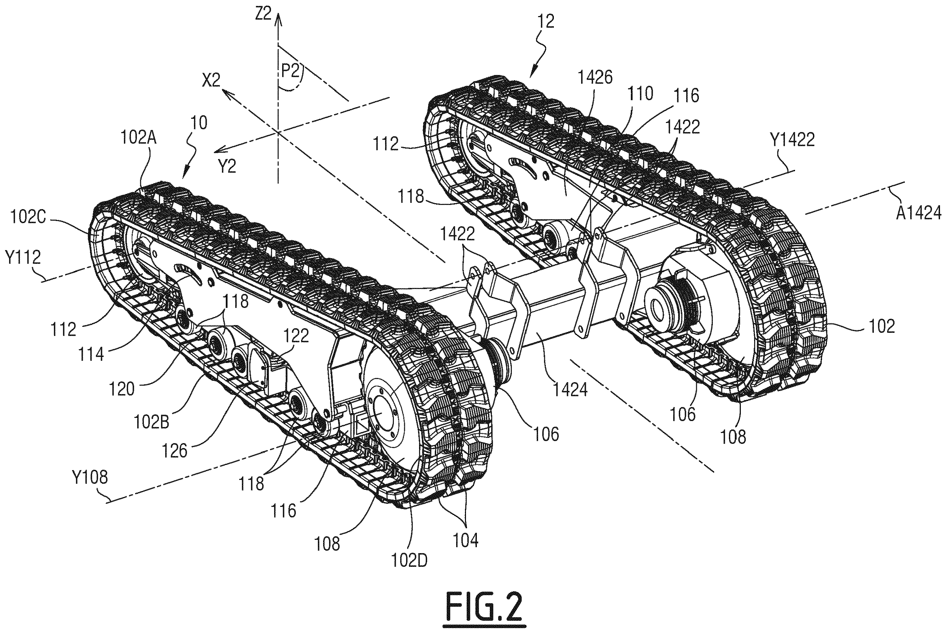

The first and second parts 142 and 144 and the main fame 14 are rigidly assembled together, e.g. by screwing. Figure 2 shows some fixation brackets 1422, provided on the first part 142 and which define together a volume for accommodating a portion of the second part 144, and an axis Y1422 parallel to axis Y2, for inserting blocking screws.

The first part 142 of the main frame has a U shape with a base 1424 having a longitudinal axis A1424 parallel to axis Y2 and two branches, which extend toward the front of the vehicle 2. Only one of these branches is visible on figures 2 and 3, with reference 1426. These two branches are symmetrical with respect to longitudinal median plane P2.

The left endless track drive 10 is mounted on the left non-visible branch of the first part 142 of the main frame 14, whereas the right endless track drive 12 is mounted on the right branch 1426 visible on figures 2 and 3.

The left endless track drive 10 includes an endless belt 102 made of a synthetic material such as reinforced rubber. The outside surface of the endless belt 102 is provided with two parallel series of engagement patterns 104 for improving the adherence of the endless belt 102 on the ground.

The endless track drive 10 also includes an electric motor 106 supplied with electric courant by the batteries 16 and whose output shaft is connected to a drive pulley 108 provided with radial outer teeth 1082 in engagement with corresponding reliefs 1022 provided on the inner surface of the endless belt 102, opposite to the outer surface, where the engagement patterns 104 are located.

The drive pulley 108 is supported by a sub-frame 110, which is rigidly mounted on the left non-visible branch of the first part 142 of the main frame 14. This sub-frame 110 defines the rotation axis Y108 of the drive pulley 108, this rotation axis being parallel to axis Y2.

The sub-frame 110 also defines a rotation axis Y112, parallel to axis Y2, for an idle pulley 112 in contact with the inner surface of the endless belt 102.

A tensioning mechanism 114 is mounted on the sub-frame 110 and allows modifying the distance between axes Y108 and Y112, this distance being measured along axis X2. This mechanism allow modifying the tension of the endless belt 102.

The drive pulley 108 and the idle pulley 112 define the geometry of the endless belt 102 which forms an upper strand 102A, a lower strand 102B in contact with the surface S of the ground, a front curve 102C and a back curve 102D.

The endless track drive 10 also includes a first arm 116 articulated on the sub-frame 110 around an articulation axis Y116 parallel to axis Y2. This first articulated arm 116 is equipped with two sets of rollers 118. Any set of rollers mentioned in this description includes two rollers, respectively located on the left and on the right of the arm on which they are mounted. The two sets of rollers 118 are located, along axis X2, between the two pulleys 108 and 112, actually between their articulations axes Y108 and Y112. These rollers are in permanent contact with the upper surface S102 of the lower strand 102B, that is the inner surface of the endless belt 102 at the level of the lower strand 102B. On the width of the belt 102, the rollers 118 are in contact with the surface S102 at a location in register with the engagement patterns 104.

By "permanent contact", one means in this description that the rollers are always in contact with the surface S102 when the vehicle 2 lies on the ground, at still stand or in movement, in straight line or in a curve, under normal working conditions of the vehicle.

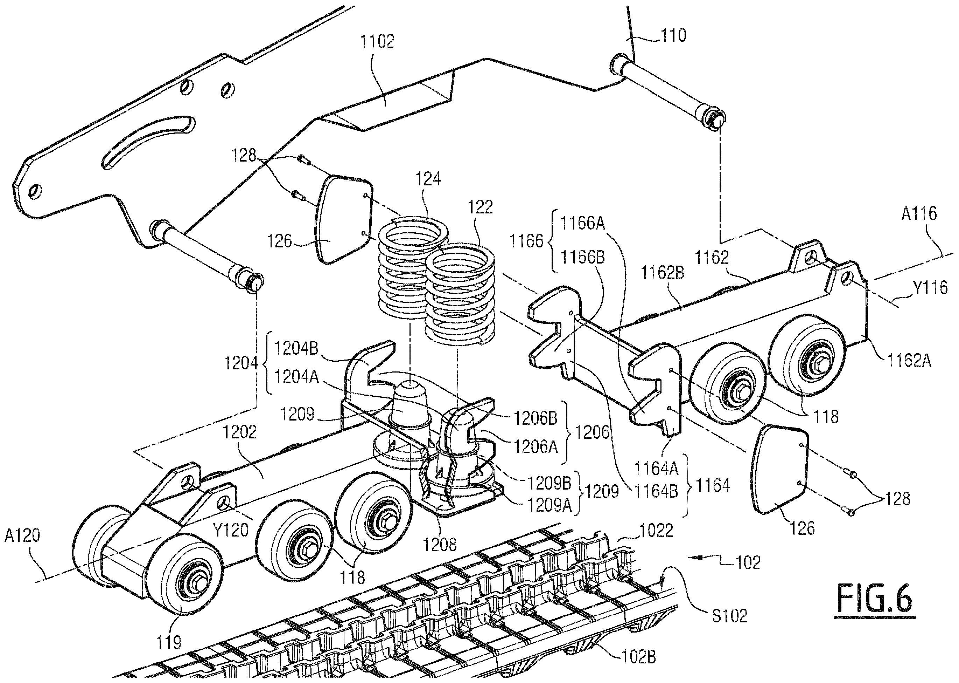

As visible on figure 6, the first arm 116 includes a shaft 1162, which extends along a longitudinal axis A116 radial with respect to articulation axis Y116. The shaft 1162 has a rectangular cross section. This shaft is articulated on the sub-frame 110, around axis Y116, at a first end 1162A. At a second end 1162B opposite to its first end, the shaft 1162 is equipped with a fork structure 1164 with two plates 1164A and 1164B extending, parallel to each other, on either lateral side of the longitudinal axis A116 of the shaft 1162. In a mounted configuration of the endless track drive 10 on the vehicle 2, the two plates 1164A and 1164B are substantially parallel to the longitudinal median plane P2 and axis A116 is a equidistant from these two plates.

Each plate 1164A and 1164B is provided with a toothed portion 1166A, respectively 1166B, in the form of an arc of a circle centered on articulation axis Y116. Each toothed portion 1166A or 1166B is made on an edge of the corresponding plate 1164A or 1164B, this edge being opposite to the shaft 1162. The toothed portions 1166A and 1166B together form a set of teeth 1166 of the first articulated arm 116.

A second arm 120 is articulated on the sub-frame 110 around an articulation axis Y120 parallel to axis Y2. This second articulated arm 120 is equipped with two sets of two rollers 118, which are located, along axis X2, between the two pulleys 108 and 112, actually between their articulation axes Y108 and Y112

In this example, the sets of rollers 118 of both articulated arms 116 and 120 are located, along axis X2, between articulation axes Y116 and Y120.

The second articulated arm 120 is also equipped with another set of rollers 119 located in front of articulation axis Y120 along axis X2, still between axes Y108 and Y112, but outside of the range between axes Y116 and Y120. This set of rollers 119 is optional.

Rollers 118 and 119 of the second articulated arm 120 are also in permanent contact with the upper surface S102 of the lower strand 102B of the endless belt 102.

The second arm 120 includes a shaft 1202 extending along a longitudinal axis A120 and articulated on the sub-frame 110 near a first end 1202A, actually between one set of rollers 118 and the set of rollers 119. Axis A120 is radial with respect to articulation axis Y120. The shaft 1202 is has a rectangular cross section and is provided, at a second end 1202B, with a fork structure 1204 with two plates 1204A and 1204B extending on either lateral side of the longitudinal axis A120 of the shaft 1202. Each plate 1204A or 1204B is equipped, on an edge opposite to the shaft 1202, with a toothed portion 1206A, respectively 1206B. These toothed portions are in the form of an arc of a circle centered on articulation axis Y120. The structure of the fork structure 1204 is similar to the one of the fork structure 1164. The toothed portions 1206A and 1206B together form a set of teeth 1206 for the second articulated arm 120.

The sets of teeth 1166 and 1206 are in meshing engagement. In other words, articulation axes Y116 and Y120 are located on sub-frame 110 in such a way and the dimensions of the first and second articulated arms 116 and 120 are such that the two sets of teeth 1166 and 1206 remain in engagement when the two articulated arms 116 and 120 rotate, respectively around axes Y116 and Y120.

The two fork structures 1164 and 1204 allow distributing the mechanical efforts on the two articulated arms 116 and 120 on both longitudinal sides of the shafts 1162 and 1202. This avoids overstressing these two arms.

The second arm 120 is provided with a sole 1208, which extends between the two plates 1204A and 1204B and connects these two plates together, along their edges close to the lower strand 102B of the belt 102. This sole 1208 is visible on figure 6 through the torn part of the fork structure 1204.

Two coil springs 122 and 124 are inserted between this sole 1208 and a bracket 1102, which belongs to the sub-frame 110.

The two springs are compressed between the bracket 1102 and the sole 1208, so that they exert an effort E1 directed toward the surface S102 of the lower strand 102B, thus toward the surface S of the ground. This effort results in a primary torque T120 exerted on the second articulated arm 120, which tends to rotate this arm around articulation axis Y120 in a direction which pushes its rollers 118 against the lower strand 102B. Since the two sets of teeth 1166 and 1206 are in meshing engagement, this torque is transferred to the first articulated arm 116 in the form of a secondary torque T116. This secondary torque T116 tends to rotate the first articulated arm 116 around articulation axis Y116, in a direction opposite to the direction of rotation of the second articulated arm, which also tends to push the rollers 118 of this first articulated arm against the lower strand 102B.

Thus, parts 110 and 116 to 124 together form a suspension system for the endless track drive 10. In particular, this suspension systems allows keeping the lower strand 102B of the endless belt 102 in contact with the ground, even if the ground surface is irregular.

Because of the two torques T116 and T120 exerted by the two springs 122 and 124, the lower strand 102B of the endless belt 102 tends to bend to take a curved configuration with its concavity turned upwardly.

As partly shown on figure 6, the sole 1208 is equipped with two protrusions 1209. Each protrusion 1209 has a foot 1209A immobilized on the sole 1208 and a stem 1209B extending perpendicularly to the sole 1208 and provided with a frustro conical free end. The lower strand of each coil spring 122 or 124 are engaged around one of these protrusions. In other words, the protrusions 1209 are inserted into the inside volume of the coil springs 122 and 124. This allows centering the biasing effort E1 exerted by these two coil springs on the sole 1208 and avoiding parasitic movements of the springs with respect to the fork structure 1204.

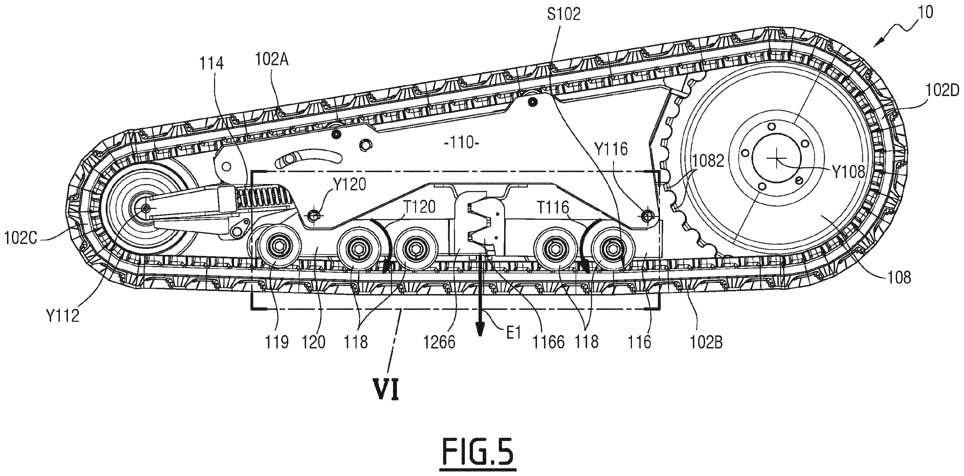

A protection plate 126 is immobilized by two screws 128 on each plate 1164 and 1164B of the fork structure 1164 and extends towards the second articulated arms 120, so that it isolates the two set of teeth 1166 and 1206 from the environment. This protection plate covers an engagement zone between the sets of teeth, which is a volume where they are in meshing engagement. This avoids dust or mud from penetrating between the teeth of these two set of teeth. On figure 5, the protection plate has been removed in order to better show the sets of teeth 1166 and 1206. One protection plate is visible on figure 6. Another non-visible protection plate is located on the other side of the suspension system, which is not visible on figure 6.

The description given here above for the left endless track drive 10 applies, mutatis mutandis, to the right endless track drive 12 which also includes an endless belt 102, an electric motor 106, a drive pulley 108, a sub-frame 110, an idle pulley 112, a tensioning mechanism 114, and first and second articulated arms 116 and 120, each equipped with rollers 118. Each articulated arms 116 or 120 of the right endless track drive 12 has a set of teeth in meshing engagement with the set of teeth of the other arm.

An effort similar to effort E1 identified here above for the left endless track drive 10 is applied by the two articulated arms 116 and 120 on the lower strand of the endless belt 102 of the right endless track drive 12, under the action of two coil springs forming biasing means, for biasing the sets of teeth toward this lower strand.

As a result of the structure of the suspension system formed in each endless track drive 10 or 12, the two articulated arms 116 and 120 are pushed by the elastic means 122 and 124 toward the lower strand 102B of the endless belt 102, in a central zone of the endless track drive, where the respective sets of teeth 1166 and 1206 cooperate, in particular between articulation axes Y116 and Y120 along axis X2. Because of the meshing engagement between the sets of teeth 1166 and 1206, the two articulated arms have a coordinated movement which concentrates the mechanical effort E1 exerted by the elastic means 122 and 124 on a central zone of the lower strand of the endless belt, at the level of the sets of rollers 118. This allows reducing the actual length of the contact zone between the lower surface of the lower strand and the ground, in particular on a loose ground. Thus, when the vehicle is making a turn, it interacts with the ground on relatively small surfaces, which avoid damaging the ground on a large area.

Since the sub-frames 110 of the two endless track drives 10 and 12 are mounted on the branches 1246 and equivalent of the first rigid part 142, the main frame 14 is supported, with respect to the ground, by the endless track drives 10 and 12, via the these two sub-frames.

The cradle 8 is supported with respect to the second part 144 of the main frame 14 by a parallelogram structure 18 which includes a first U-shaped support member 182 and a second U-shaped support member 184. The first U-shaped support member 182 includes a base 1822 centered on a longitudinal axis A1822 parallel to axis Y2 and two branches 1824 and 1826. These branches form two arms located on either side of the cradle 8 and extending toward the front of the vehicle 2. This U-shaped support member is rigidly connected to two brackets 183 articulated, around an axis Y183 parallel to axis Y2, on the second part 144 of the main frame 144. Thus, the first U-shaped support member 182 is pivotally mounted on the main frame 14, via the brackets 183. An articulation bearing 1828 is provided at the free and of each branch 1824 or 1826, in order to create an articulation with the cradle 8, around an axis Y182 parallel to axes Y2 and Y183. The second U-shaped support member 184 includes a base 1842 centered on a longitudinal axis A1842 parallel to axis Y2 and two branches 1844 and 1846. These branches form two arms located on either side of the cradle 8 and extending toward the front of the vehicle 2. This U-shaped support member is rigidly connected to two brackets 185 articulated, around an axis Y185 parallel to axis Y2, on the second part 144 of the main frame 144. Thus, the second U-shaped support member 184 is pivotally mounted on the main frame 14, via the brackets 185. An articulation bearing 1848 is provided at the free and of each branch 1844 or 1846, in order to create an articulation with the cradle 8, around an axis Y184 parallel to axes Y2 and Y183.

A damping mechanism 20 includes a U-shaped bracket 202 with a base 2022 extending along a longitudinal axis A2022 parallel to axis Y2 and two branches 2024 and 2026 extending toward the front of the vehicle, on either side of the cradle 8. The damping mechanism is rigidly mounted on the second part 144 of the main frame 14. On its free end, each branch 2024 or 2026 is equipped with a damping unit 2027, which includes two coil springs 2028 and one cover plate 2029. When it is mounted in the vehicle 2, the cradle 8 rests against the two cover plates 2029. This allows dampening relative movements and/or vibrations between the cradle 8 and main frame 14.

An actuator 22 is provided in the form of an electric cylinder. This electric cylinder 22 extends between the main frame 14 and the cradle 8, so that its rod 222 can move the cradle 8 with respect to the main frame 14, in the limits of the possibilities of movement defined by the parallelogram structure 18. Actually, since the cradle 8 is mounted on the parallelogram structure 18, the actuator 22 moves the cradle and the parallelogram structure at the same time, with respect to the main frame 14.

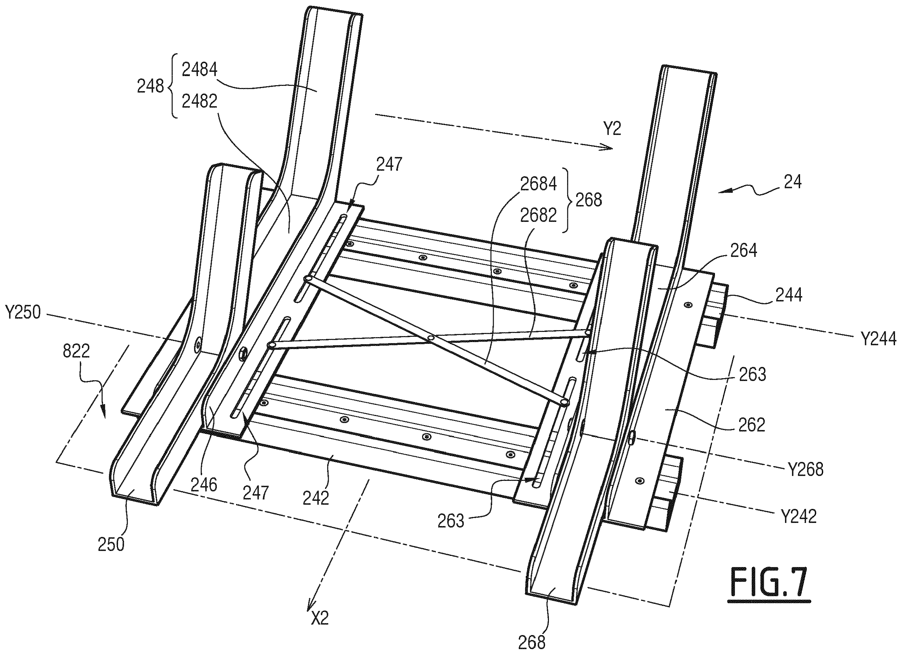

Figure 7 shows a mechanism 24 for holding the wheels of the wheelchair W on the floor 822 of the metallic box 82. This mechanism 24 includes two rails 242 and 244 extending respectively along longitudinal axes Y242 and Y244 parallel to axis Y2.

A fixed bracket 246 extends between the two rails, in a direction parallel to axis X2, and supports a profile 248 with a U-shaped cross section. The profile 248 has a first portion 2482 parallel to the floor 822 and a second portion 2484 angled at about 105° with respect to the first portion. A complementary profile 250, with a U-shaped cross section, is articulated onto the bracket 246 around an axis Y250 parallel to axis Y2. The structure of bracket 246 and profiles 248 and 250 is comparable to the one used on some trailers for holding a wheel of a motorbike.

A cart 262 is mounted on rails 242 and 244 with a possibility of a translation parallel to axes Y242 and Y244. The cart 262 supports a profile 264 similar to profile 248, with a U-shaped cross section and two portions angled with respect to each other. The cart 262 also supports a complementary profile 266, identical to complementary profile 250 and articulated on an axis Y268 superimposed with axis Y250. Profiles 264 and 266 work in the same way as profiles 248 and 250, for holding a wheel of a wheelchair.

A crossbeam structure 268 connects bracket 246 and cart 262. The respective ends of the two rods 2682 and 2684 of this crossbeam structure 268 are engaged in slots 247 and 263 respectively provided on the bracket 246 and on the cart 262, these slots extending parallel to axis X2.

Thus, the mechanism 24 allows adjusting the distance between profiles 248-250 and profiles 264-266 to the axial track of the wheelchair W, by moving the cart 262 along the rails 242 and 244, with respect to the bracket 246. Thanks to the crossbeam structure, the cart has only a translational movement parallel to axes Y242 and Y244, so that the profiles remain parallel to plane P2, which guarantees an easy introduction or extraction of the wheels of the wheelchair. This provides a good versatility for the tracked vehicle 2, which can be used with different types of wheelchairs, in particular for children and adults.

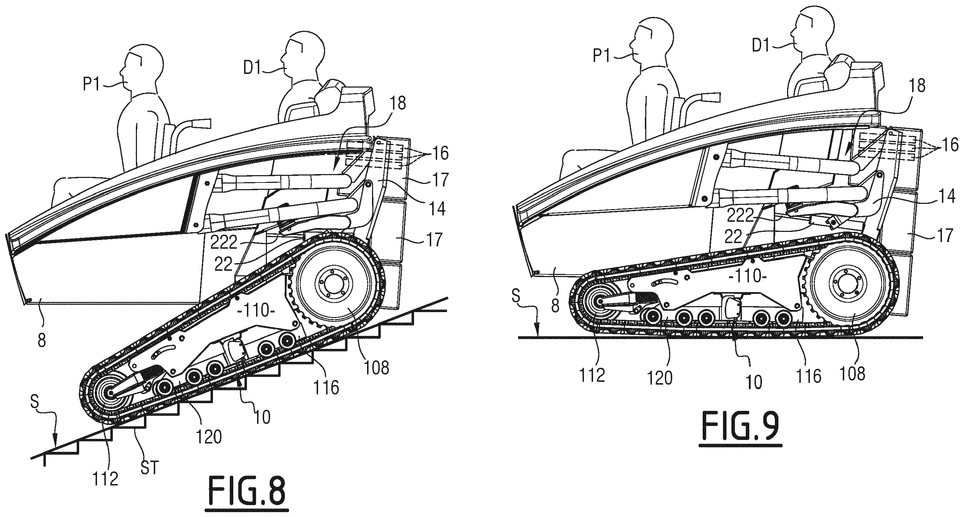

As shown by the comparison of figures 8, 9 and 10, the cradle may be moved by the actuator-rod 222 with respect to the main frame 14, in order to keep its attitude irrespective of whether the vehicle 2 moves downhill on a surface S or on steps ST, as shown on figure 8, on an horizontal surface S, as shown on figure 9, or uphill on a surface S or on steps ST. Basically, the floor 822 of the metallic box 82 can be kept substantially horizontal in these three configurations. This improves the comfort and the safety of the reduced mobility person P1 and of the driver D1 seated in the passenger compartment 6.

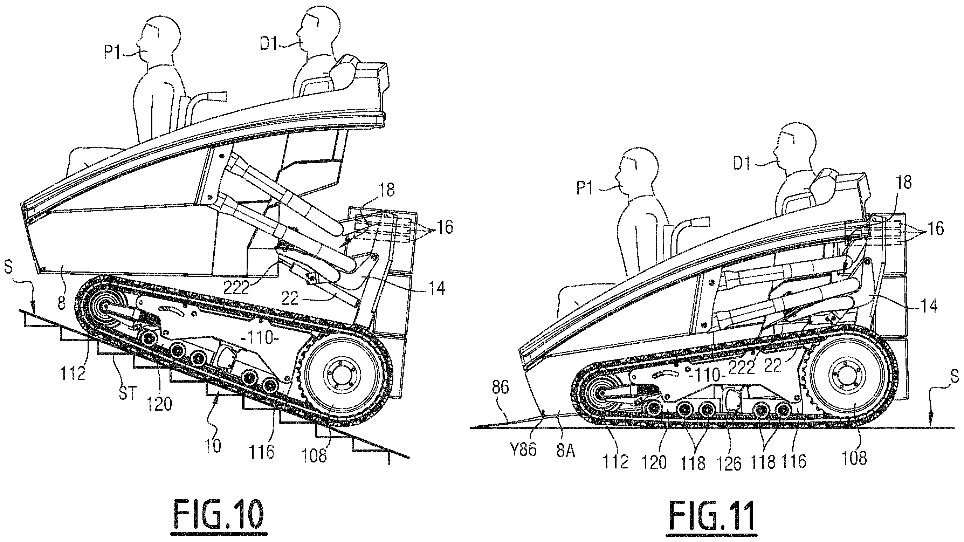

Also, as shown on figure 11, the actuator 22 can also be used for moving the parallelogram structure 18 in order to bring the forward extremity 8A of the cradle 8 close to the surface S of the ground. Then, a front panel 86 of the cradle of vehicle body can be pivoted around an axis Y86 parallel to axis Y2, in order to allow rolling the wheelchair for loading or unloading a reduced mobility person P1.

The front panel 86 is optional. It is also possible to use the vehicle body without such a panel. In such a case, in the configuration of figure 11, a frond edge of the metallic box 82 is brought into contact with, or in close vicinity to, the surface S of the grounds.

This possibility of lowering the front part 8A of the cradle 8, and possibly the front panel 86, between the two endless track drives 10 and 12 derives from the U-shape of the first part 142 of the main body 14. With such a U-shape, the main body does not hinder the downward movement of the front part 8A of the vehicle body 8 towards the ground.

The invention is represented here in case the passenger compartment includes a single front location for accommodating one reduced mobility person. According to a non-represented alternative embodiment, two such locations can be provided on the front of the vehicle for accommodating two persons seated next to each other, in a wheelchair or on a standard seat. More than two such front locations are also conceivable.

Alternatively, the driver and the reduced mobility person can seat next to each other in the passenger compartment, instead of one behind the other.

In a variant, the mechanism 24 can be removed and a standard seat can be mounted instead, in the passenger compartment, for accommodating a reduced mobility person who does not need a wheelchair.

According to the non-represented alternative embodiment of the invention, a single coil spring 122 is used, in each endless track drive, for exerted the effort E1.

In a variant, instead of one or several coil spring(s), one can use another type of elastic biasing means, such as one or several leaf spring(s) or one or several elastomeric block(s).

The number of sets of rollers 118 and 119 mounted on the first and second articulated arms can be different from 2 for the first articulated arm and 3 for the second articulated arm, as long as at least one set of rollers is present on each articulated arm.

In a variant, the sole, which receives the biasing effort exerted by the elastic means, is provided on the first articulated arm 116.

In a variant, the protection plates 126 are mounted on the second articulated arm 120. In another variant, one protection plate 126 is mounted on the first articulated arm 116 and the other protection plate 126 located on the other side of the sets of teeth, is mounted on the second articulated arm 120.

In a variant, the articulated arms 116 and 120 are not equipped with fork structures and include only one toothed section each.

## Claims

1. A tracked vehicle (2) for the transportation of at least one reduced mobility person (P1), this vehicle comprising a passenger compartment (6) and an endless track drive (10, 12) on each side of the passenger compartment, each endless track drive comprising
- an endless belt (102);
- an electric motor (106) connected to a drive pulley (108) in engagement with the belt ;
- an idle pulley (112);
- a sub-frame (110) supporting the drive pulley and the idle pulley, respectively around a first rotation axis (Y108) and a second rotation axis (Y112) parallel to the first rotation axis; and
- a suspension system (110, 116-124)
**characterized in that** the suspension system includes :
- two articulated arms (116, 120) mounted on the sub-frame (110) with a possibility of rotation around a first articulation axis (Y116) and a second articulation axis (Y120) parallel to the first and second rotation axes (Y108, Y112), each articulated arm being equipped with several rollers (118, 119) in permanent contact with an upper surface (S102) of a lower strand (102B) of the endless belt (102), between the two pulleys (108, 112), and with a set of teeth (1166, 1206) in meshing engagement with the set of teeth of the other arm; and
- elastic means (122, 124) for biasing (E1) the sets of teeth (1166, 1206) of the two articulated arms (116, 120) toward the lower strand (102B) of the endless belt.

2. The tracked vehicle of claim 1, wherein each articulated arm (116, 120) has at least one toothed portion (1166A, 1166B, 1206A, 1206B) in the form of an arc of a circle, centered on its articulation axis (Y116, Y120) on the sub-frame (110).

3. The tracked vehicle of one of claims 1 and 2, wherein each articulated arm (116, 120) includes
- a main shaft (1162, 1202) extending along a longitudinal axis (A116, A120) radial with respect to the first or second articulation axis (Y116, Y120), said shaft being articulated on the sub-frame at or near a first end (1162A, 1202A) of said shaft; and
- a fork structure (1164, 1204) with two plates (1164A, 1164B, 1204A, 1204B) extending on either side of the longitudinal axis, at a second end (1162B, 1202B) of this shaft opposite to its first end, each plate being provided with at least one toothed portion (1166A, 1166B, 1206A, 1206B) in meshing engagement with a toothed portion of the other arm.

4. The tracked vehicle of claim 3, wherein one (120) of the articulated arms (116, 120) has a sole (1208) extending between the two plates (1204A, 1204B) of its fork structure (1204) and receiving the biasing effort (E1) exerted by the elastic means (122, 124).

5. The tracked vehicle of claim 4, wherein the elastic means include at least one coil spring (122, 124) and the sole (1208) is equipped with a centering protrusion (1209) inserted into the coil spring.

6. The tracked vehicle of any preceding claim, wherein it includes at least one protection plate (126) mounted on one (116) of the articulated arms (116, 120) and covering an engagement zone between the sets of teeth (1166, 1206) of the two articulated arms (116, 120).

7. The tracked vehicle of any preceding claim, wherein it includes a main frame (14) supported by the two sub-frames (110) of the two endless track drives (10, 12), this main frame comprising a first part (142) located between the two endless track drives and a second part (144) extending upwardly, above the first part, and forming a reception volume (V144) for batteries (16) supplying the electric motors of the two endless track drives with electricity.

8. The tracked vehicle of claim 7, wherein the first part (142) of the main frame (14) has a U shape with two branches (126) extending each along an endless track drive (10, 12) and a base (142) located on the rear of the vehicle, the second part (144) extending above the base of the first part.

9. The tracked vehicle of any one of claims 7 and 8, wherein the passenger compartment (6) is formed by a cradle (8) supported by a parallelogram structure (18) articulated on the main frame (14), preferably on its second part (144).

10. The tracked vehicle of claim 9, wherein the parallelogram structure (18) includes two pairs of arms (1824, 1826, 1844, 1846), each arm being articulated on the main frame (14) and extending on one side of the cradle (8), and at least one actuator (22) for moving the cradle and the parallelogram structure with respect to the main frame.

11. The tracked vehicle of claim 10, wherein the parallelogram structure (18) is articulated on the second part (144) of the main frame (14) and includes a first U-shaped support member (182) whose branches (1824, 1826) form two arms located on either side of the cradle and a second U-shaped support member (184) whose branches (1844, 1846) form two other arms located on either side of the cradle.

12. The tracked vehicle of one of claims 9 to 11, wherein the parallelogram structure (18) includes an actuator (22) configured for keeping an attitude of the passenger compartment (6) when the vehicle moves downhill (Fig 8), on a horizontal surface (Fig 9) or uphill (Fig 10).

13. The tracked vehicle of one of claims 9 to 12, wherein it includes a damping mechanism (20) between the cradle (8) and the main frame (14), in particular in the form of two arms (2024, 2026) mounted on the main frame and equipped with damping means (2027) designed for coming into contact with the cradle.

14. The tracked vehicle of any one of the preceding claims, wherein the passenger compartment (6) defines two locations (62, 64), each adapted for accommodating one passenger (P1, D1), these locations being defined one after the other along a longitudinal axis (X2) of the vehicle, with a first location (62) situated on the front of the vehicle and adapted for accommodating a reduced mobility person (P1) and a second location (64) situated on the rear of the vehicle and forming the driver's post of the vehicle.

15. The tracked vehicle of claim 14, wherein the first location (62) is equipped with a mechanism (24) for holding the wheels of a wheelchair (W), this mechanism being adaptable to an axle track of the wheelchair.

## Patentansprüche

1. Raupenfahrzeug (2) für den Transport von mindestens einer Person mit eingeschränkter Mobilität (P1), dieses Fahrzeug umfassend einen Fahrgastraum (6) und einen Endloskettenantrieb (10, 12) auf jeder Seite des Fahrgastraums, wobei jeder Endloskettenantrieb Folgendes umfasst
- einen Endlosriemen (102);
- einen Elektromotor (106), der mit einer Antriebsriemenscheibe (108) verbunden ist, die mit dem Riemen in Eingriff ist;
- eine Leerlaufriemenscheibe (112);
- einen Hilfsrahmen (110), der die Antriebsriemenscheibe und die Leerlaufriemenscheibe jeweils um eine erste Drehachse (Y108) und eine zweite Drehachse (Y112) parallel zu der ersten Drehachse trägt; und
- ein Aufhängungssystem (110, 116-124)
**dadurch gekennzeichnet, dass** das Aufhängungssystem Folgendes umfasst:
- zwei Gelenkarme (116, 120), die an dem Hilfsrahmen (110) montiert sind, mit Möglichkeit einer Drehung um eine erste Gelenkachse (Y116) und eine zweite Gelenkachse (Y120) parallel zu der ersten und zweiten Drehachse (Y108, Y112), wobei jeder Gelenkarm mit mehreren Rollen (118, 119) ausgestattet ist, die in ständigem Kontakt mit einer oberen Fläche (S102) eines unteren Strangs (102B) des Endlosriemens (102) zwischen den zwei Riemenscheiben (108, 112) und mit einer Verzahnung (1166, 1206) sind, die mit der Verzahnung des anderen Arms in Eingriff ist; und
- elastische Einrichtungen (122, 124) zum Vorspannen (E1) der Zahnreihen (1166, 1206) der zwei Gelenkarme (116, 120) in Richtung des unteren Strangs (102B) des Endlosriemens.

2. Raupenfahrzeug nach Anspruch 1, wobei jeder Gelenkarm (116, 120) mindestens einen gezahnten Abschnitt (1166A, 1166B, 1206A, 1206B) in Form eines Kreisbogens aufweist, der auf seiner Gelenkachse (Y116, Y120) an dem Hilfsrahmen (110) zentriert ist.

3. Raupenfahrzeug nach einem der Ansprüche 1 und 2, wobei jeder Gelenkarm (116, 120) Folgendes beinhaltet
- eine Hauptwelle (1162, 1202), die sich entlang einer Längsachse (A116, A120) radial in Bezug auf die erste oder die zweite Gelenkachse (Y116, Y120) erstreckt, wobei die Welle an oder in der Nähe eines ersten Endes (1162A, 1202A) der Welle an dem Hilfsrahmen angelenkt ist; und
- eine Gabelstruktur (1164, 1204) mit zwei Platten (1164A, 1164B, 1204A, 1204B), die sich auf beiden Seiten der Längsachse an einem zweiten Ende (1162B, 1202B) dieser Welle gegenüber ihrem ersten Ende erstrecken, wobei jede Platte mit mindestens einem gezahnten Abschnitt (1166A, 1166B, 1206A, 1206B) versehen ist, der mit einem gezahnten Abschnitt des anderen Arms in ineinandergreifendem Eingriff ist.

4. Raupenfahrzeug nach Anspruch 3, wobei einer (120) der Gelenkarme (116, 120) eine Sohle (1208) aufweist, die sich zwischen den zwei Platten (1204A, 1204B) seiner Gabelstruktur (1204) erstreckt und die von den elastischen Einrichtungen (122, 124) ausgeübte Vorspannkraft (E1) aufnimmt.

5. Raupenfahrzeug nach Anspruch 4, wobei die elastischen Einrichtungen mindestens eine Schraubenfeder (122, 124) beinhalten und die Sohle (1208) mit einem Zentriervorsprung (1209) ausgestattet ist, der in die Schraubenfeder eingesetzt ist.

6. Raupenfahrzeug nach einem vorherigen Anspruch, wobei es mindestens eine Schutzplatte (126) beinhaltet, die an einem (116) der Gelenkarme (116, 120) montiert ist und einen Eingriffsbereich zwischen den Zahnreihen (1166, 1206) der zwei Gelenkarme (116, 120) abdeckt.

7. Raupenfahrzeug nach einem vorherigen Anspruch, **dadurch gekennzeichnet, dass** es einen Hauptrahmen (14) beinhaltet, der von den zwei Hilfsrahmen (110) der zwei Raupenantriebe (10, 12) getragen wird, dieser Hauptrahmen umfassend einen ersten Teil (142), der sich zwischen den zwei Raupenantrieben befindet, und einen zweiten Teil (144), der sich oberhalb des ersten Teils nach oben erstreckt und ein Aufnahmevolumen (V144) für Batterien (16) bildet, die den Elektromotoren der zwei Raupenantriebe Strom zuführen.

8. Raupenfahrzeug nach Anspruch 7, wobei der erste Teil (142) des Hauptrahmens (14) eine U-Form mit zwei Schenkeln (126), die sich jeweils entlang eines Endloskettenantriebs (10, 12) erstrecken, und eine Basis (142) aufweist, die sich an dem Heck des Fahrzeugs befindet, wobei der zweite Teil (144) sich über die Basis des ersten Teils erstreckt.

9. Raupenfahrzeug nach einem der Ansprüche 7 und 8, wobei der Fahrgastraum (6) durch ein Gestell (8) gebildet ist, das von einer Parallelogrammstruktur (18) getragen wird, die an dem Hauptrahmen (14), vorzugsweise an seinem zweiten Teil (144), angelenkt ist.

10. Raupenfahrzeug nach Anspruch 9, wobei die Parallelogrammstruktur (18) zwei Paare von Armen (1824, 1826, 1844, 1846) umfasst, wobei jeder Arm an dem Hauptrahmen (14) angelenkt ist und sich auf einer Seite des Schlittens (8) erstreckt, und mindestens einen Aktuator (22) zum Bewegen des Gestells und der Parallelogrammstruktur in Bezug auf den Hauptrahmen.

11. Raupenfahrzeug nach Anspruch 10, wobei die Parallelogrammstruktur (18) an dem zweiten Teil (144) des Hauptrahmens (14) angelenkt ist und ein erstes U-förmiges Halteelement (182), dessen Schenkel (1824, 1826) zwei Arme bilden, die sich auf beiden Seiten des Schlittens befinden, und ein zweites U-förmiges Halteelement (184) beinhaltet, dessen Schenkel (1844, 1846) zwei weitere Arme bilden, die sich auf beiden Seiten des Gestells befinden.

12. Raupenfahrzeug nach einem der Ansprüche 9 bis 11, wobei die Parallelogrammstruktur (18) einen Aktuator (22) umfasst, der konfiguriert ist, um eine Lage der Fahrgastzelle (6) beizubehalten, wenn sich das Fahrzeug bergab (Fig. 8), auf einer horizontalen Fläche (Fig. 9) oder bergauf (Fig. 10) bewegt.

13. Raupenfahrzeug nach einem der Ansprüche 9 bis 12, **dadurch gekennzeichnet, dass** es einen Dämpfungsmechanismus (20) zwischen dem Wiegegestell (8) und dem Hauptrahmen (14) beinhaltet, insbesondere in Form von zwei Armen (2024, 2026), die an dem Hauptrahmen montiert und mit Dämpfungseinrichtungen (2027) ausgestattet sind, die dazu bestimmt sind, mit dem Gestell in Kontakt zu kommen.

14. Raupenfahrzeug nach einem vorherigen Anspruch, wobei der Fahrgastraum (6) zwei Plätze (62, 64) definiert, die jeweils zum Aufnehmen eines Fahrgasts (P1, D1) geeignet sind, wobei diese Plätze entlang einer Längsachse (X2) des Fahrzeugs hintereinander definiert sind, wobei ein erster Platz (62) an der Vorderseite des Fahrzeugs ist und zum Aufnehmen einer Person mit eingeschränkter Mobilität (P1) angepasst ist, und ein zweiter Platz (64) an der Rückseite des Fahrzeugs ist und den Fahrerplatz des Fahrzeugs bildet.

15. Raupenfahrzeug nach Anspruch 14, wobei der erste Platz (62) mit einem Mechanismus (24) zum Halten der Räder eines Rollstuhls (W) ausgestattet ist, wobei dieser Mechanismus an eine Achsspur des Rollstuhls anpassbar ist.

## Revendications

1. Véhicule à chenilles (2) pour le transport d'au moins une personne à mobilité réduite (P1), ce véhicule comprenant un compartiment de passagers (6) et un entraînement de chenille sans fin (10, 12) de chaque côté du compartiment de passagers, chaque entraînement de chenille sans fin comprenant :
une courroie sans fin (102) ;
un moteur électrique (106) raccordé à une poulie d'entraînement (108) en mise en prise avec la courroie ;
une poulie folle (112) ;
un faux cadre (110) supportant la poulie d'entraînement et la poulie folle, respectivement autour d'un premier axe de rotation (Y108) et d'un second axe de rotation (Y112) parallèle au premier axe de rotation ; et
un système de suspension (110, 116-124),
**caractérisé en ce que** le système de suspension comprend :
deux bras articulés (116, 120) montés sur le faux cadre (110) avec une possibilité de rotation autour d'un premier axe d'articulation (Y116) et d'un second axe d'articulation (Y120), parallèles aux premier et second axes de rotation (Y108, Y112), chaque bras articulé étant équipé de plusieurs rouleaux (118, 119) en contact permanent avec une surface supérieure (S102) d'un brin inférieur (102B) de la courroie sans fin (102) entre les deux poulies (108, 112), et avec un ensemble de dents (1166, 1206) en mise en prise par engrènement avec l'ensemble de dents de l'autre bras ; et
des moyens élastiques (122, 124) pour solliciter (E1) les ensembles de dents (1166, 1206) des deux bras articulés (116, 120) vers le brin inférieur (102B) de la courroie sans fin.

2. Véhicule à chenilles selon la revendication 1, dans lequel chaque bras articulé (116, 120) a au moins une partie dentée (1166A, 1166B, 1206A, 1206B) se présentant sous la forme d'un arc de cercle, centrée sur son axe d'articulation (Y116, Y120) sur le faux cadre (110).

3. Véhicule à chenilles selon l'une des revendications 1 et 2, dans lequel chaque bras articulé (116, 120) comprend :
- un arbre principal (1162, 1202) s'étendant le long d'un axe longitudinal (A116, A120) radial par rapport au premier ou au second axe d'articulation (Y116, Y120), ledit arbre étant articulé sur le faux cadre au niveau de ou à proximité d'une première extrémité (1162A, 1202A) dudit arbre ; et
- une structure de fourche (1164, 1204) avec deux plaques (1164A, 1164B, 1204A, 1204B) s'étendant de chaque côté de l'axe longitudinal, au niveau d'une seconde extrémité (1162B, 1202B) de cet arbre opposé à sa première extrémité, chaque plaque étant prévue avec au moins une partie dentée (1166A, 1166B, 1206A, 1206B) en mise en prise par engrènement avec une partie dentée de l'autre bras.

4. Véhicule à chenilles selon la revendication 3, dans lequel l'un (120) des bras articulés (116, 120) a une semelle (1208) s'étendant entre les deux plaques (1204A, 1204B) de sa structure de fourche (1204) et recevant l'effort de sollicitation (E1) exercé par les moyens élastiques (122, 124).

5. Véhicule à chenilles selon la revendication 4, dans lequel les moyens élastiques comprennent au moins un ressort hélicoïdal (122, 124) et la semelle (1208) est équipée avec une saillie de centrage (1209) insérée dans le ressort hélicoïdal.

6. Véhicule à chenilles selon l'une quelconque des revendications précédentes, dans lequel il comprend au moins une plaque de protection (126) montée sur l'un (116) des bras articulés (116, 120) et recouvrant une zone de mise en prise entre les ensembles de dents (1166, 1206) des deux bras articulés (116, 120).

7. Véhicule à chenilles selon l'une quelconque des revendications précédentes, dans lequel il comprend un cadre principal (14) supporté par les deux faux cadres (110) des deux entraînements de chenille sans fin (10, 12), ce cadre principal comprenant une première partie (142) située entre les deux entraînements de chenille sans fin et une seconde partie (144) s'étendant vers le haut, au-dessus de la première partie, et formant un volume de réception (V144) pour les batteries (16) alimentant les moteurs électriques des deux entraînements de chenille sans fin avec de l'électricité.

8. Véhicule à chenilles selon la revendication 7, dans lequel la première partie (142) du cadre principal (14) a une forme de U avec deux branches (126) s'étendant chacune le long d'un entraînement de chenille sans fin (10, 12) et une base (142) située sur l'arrière du véhicule, la seconde partie (144) s'étendant au-dessus de la base de la première partie.

9. Véhicule à chenilles selon l'une quelconque des revendications 7 et 8, dans lequel le compartiment de passagers (6) est formé par un berceau (8) supporté par une structure de parallélogramme (18) articulée sur le cadre principal (14), de préférence sur sa seconde partie (144).

10. Véhicule à chenilles selon la revendication 9, dans lequel la structure de parallélogramme (18) comprend deux paires de bras (1824, 1826, 1844, 1846), chaque bras étant articulé sur le cadre principal (14) et s'étendant sur un côté du berceau (8), et au moins un actionneur (22) pour déplacer le berceau et la structure de parallélogramme par rapport au cadre principal.

11. Véhicule à chenilles selon la revendication 10, dans lequel la structure de parallélogramme (18) est articulée sur la seconde partie (144) du cadre principal (14) et comprend un premier élément de support en forme de U (182) dont les branches (1824, 1826) forment deux bras situés de chaque côté du berceau et un second élément de support en forme de U (184) dont les branches (1844, 1846) forment deux autres bras situés de chaque côté du berceau.

12. Véhicule à chenilles selon l'une des revendications 9 à 11, dans lequel la structure de parallélogramme (18) comprend un actionneur (22) configuré pour maintenir une attitude du compartiment de passagers (6) lorsque le véhicule se déplace en descente (Figure 8), sur une surface horizontale (Figure 9) ou en montée (Figure 10).

13. Véhicule à chenilles selon l'une des revendications 9 à 12, dans lequel il comprend un mécanisme d'amortissement (20) entre le berceau (8) et le cadre principal (14), en particulier se présentant sous la forme de deux bras (2024, 2026) montés sur le cadre principal et équipés avec des moyens d'amortissement (2027) conçus pour venir en contact avec le berceau.

14. Véhicule à chenilles selon l'une quelconque des revendications précédentes, dans lequel le compartiment de passagers (6) définit deux emplacements (62, 64), chacun adapté pour loger un passager (P1, D1), ces emplacements étant définis l'un après l'autre le long d'un axe longitudinal (X2) du véhicule, avec un premier emplacement (62) situé à l'avant du véhicule et adapté pour loger une personne à mobilité réduite (P1) et un second emplacement (64) situé à l'arrière du véhicule et formant la place du conducteur du véhicule.

15. Véhicule à chenilles selon la revendication 14, dans lequel le premier emplacement (62) est équipé avec un mécanisme (24) pour maintenir les roues d'un fauteuil roulant (W), ce mécanisme pouvant être adapté à une chenille d'essieu du fauteuil roulant.
